# EUROPEAN PATENT SPECIFICATION

(11) **EP 0 459 540 B1**
(45) Date of publication and mention of the grant of the patent: **15.05.1996**
(21) Application number: 91200439.7
(22) Date of filing: 01.03.1991
(51) Int. Cl.: A01G 7/04, A01C 1/00

(54) **Method and equipment for accelerating the growth of, and developing better vital qualities in, vegetable organisms**
Verfahren und Vorrichtung zur Förderung des Wachstums und zum Verbessern der vitalen Qualitäten von pflanzlichen Organismen
Méthode et équipement pour accélérer la croissance et améliorer les qualités vitales d'organismes végétaux

(30) Priority: 28.05.1990 IT 2044590
(43) Date of publication of application: 04.12.1991
(73) Proprietor: Caprotti, Guido, Hyde Park Square, London (GB)
(72) Inventor: Cecarani, Franco, I-20122 Milan (IT)
(74) Representative: Fusina, Gerolamo

(56) References cited:
- EP-A- 0 039 163
- EP-A- 0 197 748
- EP-A- 0 236 088
- CH-A- 151 202
- DE-A- 2 234 005
- DE-A- 2 814 286
- DE-A- 3 426 153
- FR-A- 1 231 676
- "Water ontharder, elektronica tegen kalkaanslag", Elektuur, July/August 1989.

## Description

The present invention relates to a method and an equipment for accelerating the growth of, and developing better vital qualities in, vegetable organisms.

In the agricultural sector, continuous efforts are carried out aiming at improving the cultivation systems, in order to increase the profitability thereof.

Heretofore, such efforts have been above all so directed, as to take advantage of the knowledge offered by chemistry for that purpose. The development in this direction made it possible more and more effective substances to be used, which unfortunately showed severe limits as to their capability of integrating in the environment in which they operate, with negative consequences on the environment.

From EP-A-0 039 163 a method is known that stimulating the vegetative process by electromagnetic means solves the drawbacks of the chemical methods for improving the growth of the plants.

It should be furthermore said that the presently known methods, used until now to treat vegetables with magnetic fields, proved to be expensive, both owing to the techniques used - only possible in the laboratory - and to their energy cost; as well as difficult to be scaled-up to produce apparatuses suitable for being marketed, to be manufactured at low costs at an industrial level.

From the Article "Water-Ontharder" from "Elektuur" July/August 1989 a device for water treatment in the form of softening is known, where water is softened by means of unidirectional pulsating current.

From DE-A-2 234 005 there is also known an apparatus for magnetically treating seeds in order to stimulate the vegetative process.

The prior art thus teaches to submit to the magnetic field just one stage of the biological cycle of the vegetable organism, and do not interact on the environment inside which said organism develops, i.e., water, soil, air.

The purpose of the instant invention is to obviate the above mentioned drawback, i.e. to increase the profitability of vegetable organisms cultivation, favouring the growth of cultivated vegetable species, without anyway disturbing the ecosystem of cultivations.

Such purposes are achieved by an equipment for accelerating the growth of vegetable organisms according to claim 1.

An equipment for practicing the method according to the present invention is illustrated for merely exempiifying, non-limitative, purposes in the figures of the hereto attached drawings in which:

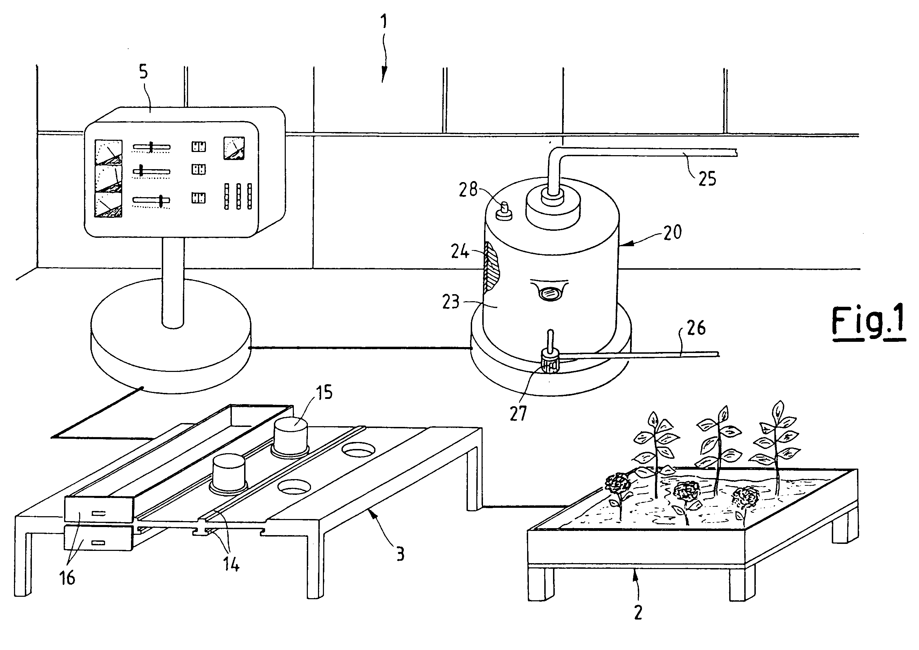

Figure 1 shows a perspective view of a type of equipment for accelerating the growth of, and developing better vital qualities in, vegetable organisms according to the present invention;

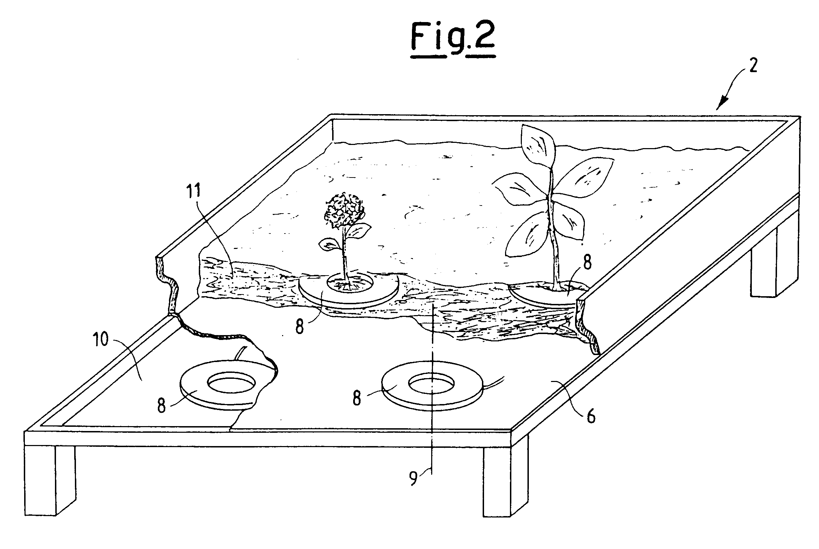

Figure 2 shows a partially sectional perspective view of the unit for the treatment of the earth and of small plants during their growth stage;
Figure 3 shows a partially sectional perspective view of the unit for the simultaneous and differentiated treatment of a plurality of types of bulbs or seeds;
Figure 4 shows a perspective view of a unit for the treatment of seeds in bulk.

The method according to the present invention has its starting-point in the scientific observation that in the presence of changes in the magnetic field, which concern the earth (due, e.g., to storms, moon phases, solar magnetic storms), an increase results in the growth of the vegetable organisms.

The method according to the present invention reproduces, for industrial purposes, conditions favourable to the growth and to the development of vegetable organisms by means of the exposure of these latter to a magnetic field, and therefore to the magnetic flux which generates said field, which preferably is of pulsating, low-frequency polarized type, and with a half-sinusoidal wave shape (elf signals).

Said magnetic field is generated by a unidirectional pulsating electrical current flowing through one or more helical coils having a vertical axis. Said coils have their turns wound on a plane perpendicular to the axis of the same plane.

The reaserches and tests carried out enabled us to define and select the polarized, low- frequency, semi-sinusoidal-wave pulsating magnetic field, as the most suitable magnetic field to be applied to vegetable organisms both owing to the quality of the results obtained (in the absence of contraindications for the same eatability of horticultural produces) and thanks to the simple applicability of said method in any kinds of treatments (seed, plant, water, earth).

The use of a polarized, low-frequency, semi-sinusoidal-wave pulsating magnetic field makes it possible a magnetic field to be obtained with the use or small amounts of electrical energy (voltages which may even be of small value, even less than 10 volts in pulsating currents, and low intensity currents (even of a few milliamperes). Also from these elements one may infer the low "energy cost" of the present method.

Said magnetic field can be obtained by means of simple-to-produce, easy-to-use apparatuses.

Said polarized, low-frequency, semi-sinusoidal-wave pulsating magnetic field makes it possible a magnetic field to be obtained, whose force lines are orientated in north-south direction, an essential feature for a correct growth of vegetable organisms to be achieved, within the respect of the same polarities or terrestrial magnetic field.

For that purpose, the spiral-shaped coils are wound with their turns around an axis perpendicular to the plane of the same coil.

Some studies enabled to observe that in the absence of a terrestrial magnetic field, even human beings are struck by several diseases, which affect different parts of their organism (Scherf). Observations performed on seeds submitted to the action of a magnetic field have shown a sex difference in their germination, due to the polarity the seeds were, submitted to. The same physical characteristics of liquids containing oxygen can be modified by a polarized, low-frequency, semi-sinusoidal-wave pulsating magnetic field ("Campi magnetici in medicina [Magnetic Fields in Medicine]", publisher: Minerva Medica 1983, page 388).

Finally, careful studies have evidenced differences in behaviour between different magnetic fields; for example, the polarized, low-frequency, semi-sinusoidal-wave pulsating magnetic fields cause an acceleration in cell respiration and a better use of oxygen, whilst stationary magnetic fields may even prevent cells from using oxygen (Lyu B.N. Izvestia Akademii Nauk SSSR, Seriya Biologicheskaya, 3, 414-424, 1980) (Lenzi: Rivista di Medicina Aeronautica e Spaziale, 29th year, vol. 29, 1, January-March 1966).

According to the present method, seeds, small plants deriving from said seeds, the earth in which said plants are cultivated, and the irrigation water, or one only, or more than one of said elements, are exposed to the flux of said magnetic field.

The value of the intensity of a magnetic field for the main horticultural, floricultural and cereal species, is mainly selected from within the following ranges: intensity: peak values of from 20 to 1,000 Gauss, corresponding to approximate average values of from 4 to 400 Gauss, as detected by means of a gauss-meter equipped with a Hall sensor and for a magnetic field with frequencies preferably of 50 or 100 Hz.

Of course, the detected average values are different from the peak values, owing to the characteristics of response speed shown by the commonly used instruments.

The intensity of the magnetic field is measured on the turns of the coil, and inside said coil, and the reported values are expressed as ampere-turns, divided by the thickness of coil winding.

The value of the time of exposure to the magnetic field can be comprised within the range of from a few hours, up to several days; in this latter case, the exposure to the action of the magnetic field can be carried out by means of periodical exposures, separated by time periods during which the intensity of the magnetic field is reduced to a small value or is reduced down to zero. The general rule is that to tendentially high values of the intensity of the magnetic field, tendentially short exposure times correspond, and vice-versa, so as to prevent saturation levels from being reached, which may even result in effects which are the contrary of the desired outcome.

The values of intensity of the magnetic field, and of time of exposure to it, which cause an optimum growth of the vegetable organisms vary as a function of the species to be treated, of the conditions under which the growth of the plants takes place, and of whether to the magnetic field one or more of said elements: earth, seeds, plants and irrigation water, are exposed. The optimum values for each species can be determined by those skilled in the art by means of selective experimental investigations, which should take into account the influence which each one of the following parameters may have on the other parameters: the intensity of the magnetic field, the time of exposure to the same magnetic field, the exposure to the action of the magnetic field of one or more of the following elements: the seed, the cultivation earth, the plant, the irrigation water.

In determined situations (e.g., in order to reduce the costs of building of large-size water units, or when the need exists of putting vegetable organisms and earth between two linked and unidirectional force fields), the solenoids are positioned by aligning along one single vertical straight line their axis, with their north pole being orientated towards the same direction.

When said solenoids are arranged according to the above disclosed pattern, the intensity and density of the magnetic field in the space between them will increase due to synergy at a predetermined distance. Some tests evidenced the usefulness in some treatments, of the insertion in the cultivation earth, irrigation water, in the plane of polarization of the vegetable organisms, of permanent magnets or of fragments thereof, such as: ferrite, samarium-cobalt, neodymium-iron-boron, plasto-ferrite, then submitting the vegetable organisms to the action of the polarized, low-frequency pulsating magnetic field.

Due to the effect of the magnetic resonance, the intensity and density of induced magnetic field per cm² increases. The permanent magnets are positioned with all their polarities being orienrated in the same direction (preferably with the north pole being directed upwards), anyway always with their polarities being perpendicular to the support plane (horizontal line).

For merely indicative purposes, the time of exposure of irrigation water to the magnetic field, having an intensity comprised within the above mentioned values, can be of from 4 to 24 hours, although these times can be extended without that any substantial consequences arise, that may be detrimental to the results.

As regards the bulbs or the seeds, the time of exposure to the magnetic field having intensity values comprised within the above mentioned values, can be of from 6 hours to 20 days, although these times can be extended without that any substantial consequences arise, that can be limitative of the results, with said exposure being carried out before the sowing.

As regards the earth on which the vegetable species are planted, the treatment substantially lasts throughout the time of growth of the planted species, possibly with time intervals. In this regard, it was observed that in such circumstances the magnetic field exerts its action above all on the chemical compounds contained in the cultivation earth.

In fact, the magnetic field to whose action the earth is exposed, accelerates the normal electrochemical reactions which normally are already taking place inside said earth. The magnetic field appears to be particularly active as regards iron and copper, and as regards all of those substances which are consequently converted at a faster rate into useful substances for plant metabolism. In winter season, the magnetic field is beneficial to earth also through the heating caused by the Joule effect. In winter season, between earth submitted to the action of the magnetic field, and earth nor submitted to such an action, differences in temperature may exist, which can be as high as 2 or 3 degrees Celsius.

On water, the magnetic field tends to have an ionizing and polarizing effect, with the chemical substances which are least useful, if not even harmful, to plants, being decomposed -- and hence neutralized. Moreover, inasmuch as they are characterized by a higher specific gravity, these substances will decant. Additionally, a change in the values of pH and of the non-volatile residue was observed; and finally, it was observed that when it is submitted to the action of the magnetic field, exposed water shows a tendency to evaporate more slowly.

The influence of the magnetic field on the plants was observed through the sensitization of the photosynthetic pigments, which show a high level of sensitization to the magnetic field. Chloroplasts, in an aqueous suspension are orientated by an external magnetic field. The molecules of chlorophyli are so orientated as to show a diagrammatic anisotropy. When correctly metered, the magnetic field favours the circulation of the liquids. Of considerable importance is the effect of the magnetic field on oxygen; such an effect increases with increasing temperatures of the element submitted to the action of the magnetic field.

For exemplifying purposes, some cases of bulbous plants are illustrated, which are submitted to the treatment before being buried inside pots according to the directions supplied by the producer thereof.
- * Narcissus: : 280 Gauss and 50 Hz (40+50 Gauss at the Hall sensor) for 7 days;
- * Tulip: : 280 Gauss and 50 Hz (40+50 Gauss at the Hall sensor) for 15 days;
- * Hyacinth: : 280 Gauss and 50 Hz (40+50 Gauss at the Hall sensor) for 2 days.

The plants are sown in late autumn, the emergence of the small plants from earth takes place at an earlier time in case of treated bulbs as compared to non-treated bulbs, cultivated under identical conditions. Such an earlier emergence takes place from a few days in advance in some cases, up to 30+40 days in advance in other cases (e.g., in case of tulip).

Approximately two months after being sown, all the bulbs which were previously submitted to the action of the magnetic field give rise to a perfectly developed plant; the growth of the other plants, from non-treated bulbs, is limited to one third only.

Irrigation water is submitted to a treatment with a peak intensity of about 200 Gauss, for 24 hours.

The earth in which tulips are cultivated is treated with a peak intensity of 300 Gauss throughout its growth time, including blooming time.

In case of narcissus and hyacinth, the earth was not treated; however, the possibility of such a treatment, in order to further enhance the growth, is not excluded.

In the following, some examples are reported of vegetables submitted to the treatment by means of a magnetic field.

### * Winter spinach:

The seeds are treated by being exposed to a magnetic field of (peak) intensity of 280 Gauss and 50 Hz (40+50 Gauss at the Hall sensor) for 20 days. The treatment of water takes place with a peak intensity of about 200 Gauss, for at least 24 hours.

The growth of treated spinach was about 2 or 3 days in advance as compared to other spinach plants growth under the same conditions, but not submitted to the action of the magnetic field. After a few days, the stem of the treated spinach plants have already emerged from earth; the stems of the other plants had not yet emerged at that time. The cultivation takes place in winter time, inside a cold greenhouse, i.e., with a temperature comprised within the range of from 0 to -4°C. The ratio of growth of treated spinach to non-treated spinach is of 2:1 to the advantage of the first one; the density ratio (i.e., the ratio of the relevant numbers of plants emerged approximately one month after sowing) is of 3:1.

Strength, resistance delayed decay are considerably better in treated than in non-treated spinach.

Also in case of spinach, a treatment of earth is not necessary in order to obtain appreciable results: such a matter of fact renders the invention an economically practicable one; however, a treatment of earth makes it possible the phenomena of growth to be further enhanced, as demonstrated by the following experimental test.

Spinach plants were submitted to the action of a magnetic field throughout their growth time, until they reached their complete development stage. The seed where previously submitted to the action of a magnetic field of 200 Gauss of peak intensity, with a frequency of 50 Hz, for a time of 96 hours. Water used in order to irrigate the plants was submitted to the reaction of a magnetic field of 200 Gauss and 50 Hz for at least 12 hours.

A first group of plants were submitted to the action of a magnetic field having a peak intensity of 100 Gauss at 50 Hz; a second group of plants were submitted to the action of a magnetic field of 160 Gauss of peak intensity at 50 Hz; and a third group of plants were exposed to a magnetic field of 140 Gauss of peak intensity, at 100 Hz. The results were satisfactory in all cases.
* Green-leaf chicory; mixed salad ("misticanza"), cutting lettuce ("da taglio"), garden cress, garden rocket, "erba stella" (lion's foot, Alchemilla vulgaris var. Linn.), endive "riccia" (Chicorium endivia var. crispum), chicory "spadona verde da taglio" (Chicorium intybus var. Spadona), "giant" parsley ("gigante d'Italia"), green core chicory ("a grumo verde")
The treatment of seeds takes place by exposure to a magnetic field which, for indicative purposes, has a peak intensity of 300 Gauss and 50 Hz (50+60 Gauss at the Hall sensor). The exposure time is of 15 days. Cultivation earth is watered with water submitted to the action of a magnetic field with a peak intensity of about 200 Gauss, for a 48-hours exposure time.

Vegetable species are sown between May and June. The ratio of growth and amount of treated vegetables to growth and amount of non-treated vegetables is of from 20 to 50%, in favour of the first ones. Their blooming is richer and earlier, they show a higher resistance to heat and to drought, and their colour is brighter (thanks to the optimization of the photosynthetic process).

Larger and more tender leaves at the same growth phase. The above reported values of magnetic field, and of times of application thereof are only those which yielded the best results; but, as already said, they can be varied, with positive effects on growth being equally obtained.

In case of cabbage lectuce (Lactuca sativa capitata) called "meraviglia delle quattro stagioni [wonder of the four seasons)", small plants were submitted to the action of the magnetic field, during their growth stage, until they reached their complete development.

Seeds were priorily submitted to a magnetic field of 300 Gauss, 50 Hz for a 96-hours time.

Irrigation water was previously submitted to a magnetic field of 200 Gauss, 50 Hz for at least 6 hours. A first group of plants were submitted to the action of a magnetic field having a peak intensity of 100 Gauss at a frequency of 50 Hz; a second group of plants were submitted to the action of a magnetic field having a peak intensity of 160 Gauss at a frequency of 50 Hz; and a third group of plants were submitted to the action of a magnetic field having a peak intensity of 140 Gauss at a frequency of 100 Hz.

The results were satisfactory in all of said three cases.

Also wheat was submitted to the treatment by means of a magnetic field, according to the following modalities.

Five groups of seeds were prepared.
* A first group of seeds were exposed to a magnetic field with a peak intensity of 300 Gauss at 50 Hz for about 20 days; during the whole stage of their growth and maturation, the small plants were submitted to the action of a magnetic field of 140 Gauss of peak intensity and with a frequency of 50 Hz. Irrigation water was magnetized with a magnetic field of 200 Gauss of peak intensity at 50 Hz, for a time of not less than 6 hours.
* A second group of seeds were exposed to a magnetic field with a peak intensity of 300 Gauss at 50 Hz for about 20 days; during the whole stage of their growth and maturation, the small plants were submitted to the action of a magnetic field of 140 Gauss of peak intensity and with a frequency of 100 Hz. Irrigation water was magnetized with a magnetic field of 200 Gauss of peak intensity at 50 Hz, for a time of not less than 6 hours.
* A third group of seeds were exposed to a magnetic field with a peak intensity of 400 Gauss at 50 Hz for about 20 days. Irrigation water was magnetized with a magnetic field of 200 Gauss of peak intensity at 50 Hz, for a time or not less than 6 hours. During their growth and maturation stage, the plants were not submitted to any actions of any magnetic fields. Irrigation water was submitted to the action of a magnetic field of 200 Gauss of peak intensity at 50 Hz, for a time of not less than 6 hours.
* A fourth group of seeds were exposed to the action of a magnetic field with a peak intensity of 200 Gauss at 100 Hz for about 20 days.
   During their growth and maturation stage, the plants were not submitted to any actions of any magnetic fields.
   Irrigation water was submitted to the action of a magnetic field of 200 Gauss of peak intensity at 50 Hz, for a time of not less than 6 hours.
* A fifth group of seeds were not submitted to any treatments, for comparative purposes.

During the growth and the whole development of the plants a difference in development was constantly observed between the groups submitted to the treatment with the magnetic field, and the group which was not given such a treatment; a difference which is more and more marked while time goes on -- to the favour of the treated groups, both as regards the development rate, and the evident state of welth of the plants (colour, dimensions and strength). This difference in luxuriance is larger in case of the groups which underwent a complete treatment.

Referring in particular to Figures from 1 to 4, an equipment according to the invention, generally indicated by the reference numeral 1, comprises a unit 2 for the treatment of the earth and of the plants during their growth stage, a unit 3 for the simultaneous, differentiated treatment of bulbs or seeds or a unit 4 for the treatment of seeds in bulk, and a unit 20 for water treatment. All of the above cited units are connected with a central control unit 5, which governs in synchronism the operation of the individual units, such that they can practically carry out the method according to the present invention, on the basis of the preset values of magnetic field.

The unit 2 for treating earth, as well as the plants during the growing stage of these latter comprises a bedstead 6 in which one or more solenoid(s) 8 is(are) installed. In case more than one solenoids 8 are installed, to constitute a group, of two or more concentrically superposed solenoids arranged according to a vertical axis 9. In the herein exemplified case, this group of solenoids comprises three solenoids 8; a first solenoid is arranged on the bottom 10 of the bedstead 6, a second solenoid is arranged inside the body of the cultivation earth 11 at sowing depth, and a third solenoid is directly positioned on the surface of the cultivation earth. Therefore, the vegetable species develops inside said groups of solenoids. Obviously, each solenoid is enclosed inside a case, which electrically insulates it from the surrounding cultivation earth.

The distance of the solenoids from one another is established as a function of their power, and of their operating frequency. The solenoids 8 of each group can generate magnetic fields, which are different as to intensity and orientation of the magnetic flux, so as to endow the resulting magnetic field with particular characteristics selected as a function of the position thereof relatively to the elements to be submitted to the action of the magnetic field.

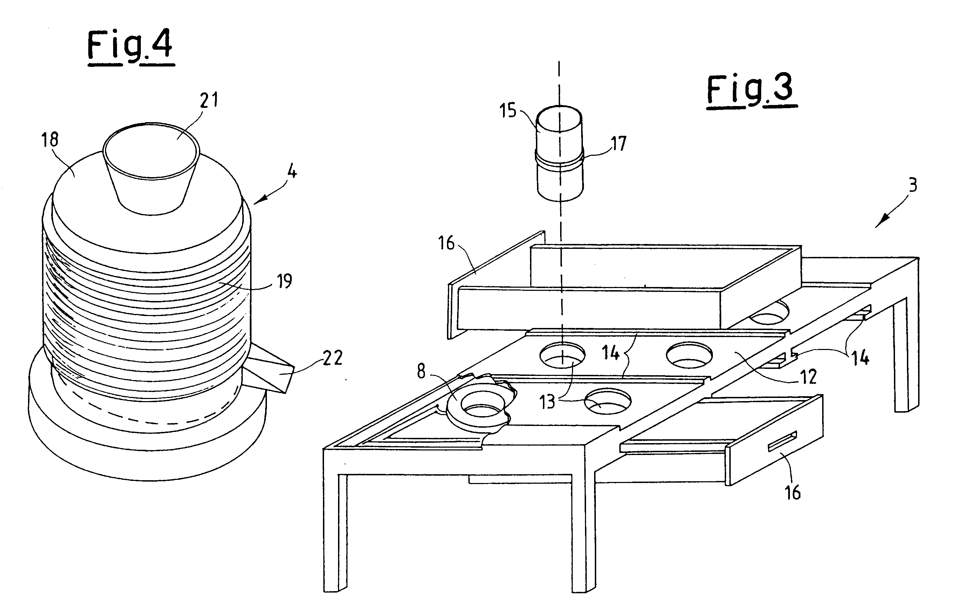

The unit 3 for the differentiated treatment of bulbs or seeds substantially comprises a top 12 inside which one or more solenoid(s) 8 is(are) housed. In the case shown in Figure 3, the solenoids 8 are more than one, and are suitably spaced apart from each other.

The top 12 is provided with through-holes 13 at the circular portion contained inside the binding of each solenoid 8, as well as with guides 14, both under and above the top 12. Inside the through-holes 13 cylindrical glasses 15 can be inserted, and guides 14 make it possible drawers 16 to be installed.

The cylindrical glasses 15 are equipped with a stop collar or sleeve 17 placed at middle height around them, acting as a stop element when the glases are slid into the through-holes 13. The drawers 16 can be installed both above and under the top 12, and furthermore, they can be provided with compartments in order to separate the seed varieties contained inside them.

The cylindrical glasses 15 are also used in order to submit the seeds to the treatment, like the drawers 16, anyway alternatively to these latter.

The unit 4 for the treatment of the seeds in bulk substantially comprises a container 18 on whose side surface the turns of a solenoid 19 are wound. The upper portion of the container 18 is provided with a charge hopper 21, and the bottom portion thereof is equipped with a discharge chute 22, from which the seeds treated in bulk can be easily discharged by gravity. The unit 4 can be possibly completed by a mixer device installed inside the interior thereof and not illustrated far the sake of simplicity. The action performed by the mixer device is that of mixing the seeds contained inside the container 18, so as to prevent that a portion of said seeds may be exposed to the action at the magnetic field to a different extent from other portions, owing to a possible unevenness of the magnetic field inside the same container 18.

The unit 20 for the treatment of water comprises a tightly sealed container 23 an whose side surface the turns of a solenoid 24 are wound.

The upper portion of the tightly sealed container 23 is connected with a pipe for water feed 25, and from the bottom portion a watering pipe 26 leaves. The watering pipe 26 is closed by an electrovalve 27.

The tightly sealed container 23 is furthermore equipped at its upper portion with a vent valve 28 which enables the air shifted by water during the filling/emptying of the container 20 to enter/leave the container.

The central control unit 5 governs the units 2, 3, 4 and 20, such as to cause them to operate in synchronism according to programs preset by the operator and stored by said unit.

The herein illustrated equipment 1 is particularly addressed to cultivations inside greenhouses; however, an application thereof to outdoor cultivations is not excluded. However, in this latter case the unit 2 would be get rid of; and, due to economic reasons, submitting seeds and plants, when bedded out in the land, to the treatment with the magnetic field is avoided, although such a treatment is at all possible in this case too.

### LEGEND

- 1.: Equipment
- 2.: Unit for treating earth and plants during the growth stage of these latter
- 3.: Unit for the differentiated treatment of bulbs or seeds
- 4.: Unit for treating seeds in bulk
- 5.: Central control unit
- 6.: Bedstead
- 8.: Solenoid
- 9.: Vertical axis
- 10.: Bedstead bottom
- 11.: Cultivation earth
- 12.: Top of unit "3"
- 13.: Through-holes of top "12"
- 14.: Guides
- 15.: Cylindrical glasses
- 16.: Drawers
- 17.: Stop collar
- 18.: Container of unit "4"
- 19.: Solenoid of unit "4"
- 20.: Unit for water treatment
- 21.: Hopper of unit "4"
- 22.: Chute of unit "4"
- 23.: Tightly sealed container of unit "20"
- 24.: Solenoid
- 25.: Feed pipe
- 26.: Watering pipe
- 27.: Electrovalve
- 28.: Vent valve

## Claims

1. Equipment for accelerating the growth of vegetable organisms, comprising a unit (3,4) for treatment of bulbs or seeds of the vegetable organisms having at least one container (15,18) and a solenoid (8,19) shaped to surround the container (15,18), and a control unit (5) generating a pulsating current and electrically connected with said solenoid (8,19) for generating a pulsating magnetic field within said container (15,18), characterised in that the equipment further comprised a unit (20) for treatment of irrigation water including a sealed container (23) having a water inlet (25) and a water outlet (26) and a solenoid (24) wound around the container (23) and electrically connected with said control unit (5), and in that the solenoids (8,19;23) of said bulbs or seeds container(s) (15,18) and of said water container (23) are selectively energizable by said control unit (5), said control unit (5) generating unidirectional pulsating currents whereby said pulsating magnetic fields have unidirectional polarity, the operating cycles of said solenoids (8,19;23) being programmable by said control unit (5) throughout the growing process of the vegetable organisms.

2. Equipment according to claim 1, characterised in that the unit (4) for treatment of seeds comprises a container (18) for housing seeds in bulk, said container (18) having a charging hopper (21) at its upper portion and a discharge chute (22) at its bottom portion.

3. Equipment according to claim 1, characterised in that the unit (3) for treatment of bulbs or seeds comprises a plurality of containers (15), a support structure (12) having a plurality of through holes (13) for removably receiving said plurality of containers (15), and a plurality of solenoids (8) each arranged around a respective one of said through holes (13) with the axes disposed vertically for generating magnetic fields with north polarity directed upwards.

4. Equipment according to claim 1 and either one of claims 2 or 3, characterised in that it further comprises a unit (2) for treatment of cultivation earth (11) including a bedstead (6) housing the cultivation earth (11), a plurality of solenoids (8) arranged within the cultivation earth (11) and electrically connected with said control unit (5), said solenoids (8) being arranged with vertical axes and being energizable by said control unit (5) for generating magnetic fields with north polarity directed upwards.

5. Equipment according to claim 4, characterised in that said plurality of solenoids (8) comprises groups of preferably coaxially superposed solenoids, each group including at least a first solenoid positioned at the bottom (10) of the bedstead (6) separate from the cultivation earth (11), a second solenoid positioned inside the cultivation earth (11) at the sowing depth, and at least a third solenoid positioned on the surface of the cultivation earth (11).

6. Equipment according to claim 1 or 2, characterised in that said seed container (4) comprises a mixing device in its interior.

7. Equipment according to claim 1, characterised in that said water container (23) is provided with means for intercepting said water inlet (25) and said water outlet (26), and with free water level control means.

8. Equipment according to claim 1 or 2, characterised in that the pulsating currents generated by said control unit (5) are of a half-sinusoidal wave type with a frequency within the extremely low frequency (elf) range.

9. Equipment according to claim 1, characterised in that said control unit (5) comprises means for temporarily inactivating current supply to said solenoids (8,19,23).

10. Equipment according to claim 1 or 7, characterised in that permanent magnets or fractions thereof are inserted in the irrigation water in said water container (23).

11. Equipment according to claim 4 or 5, characterised in that permanent magnets or fractions thereof are inserted in the cultivation earth (11) in said bedstead (6).

12. Use of an equipment according to claim 1, for accelerating growth of horticultural, floricultural and cereal species, characterised in that the control unit (5) is set to expose seeds of said species to a magnetic field of intensity having peak values of 20 to 1,000 Gauss, corresponding to average values of 4 to 100 Gauss, with a frequency comprised between 50 and 100 Hz for a time between 6 and 20 days before sowing, and to expose the irrigation water to a magnetic field for a time comprised between 4 and 24 hours before feeding the water to the cultivation earth (11).

13. Use of an equipment according to claim 1, for accelerating growth of bulbs of narcissus, characterised in that the control unit (5) is set to expose the bulbs to a magnetic field of 280 Gauss with a frequency of 50 Hz for a time of 7 days, and to expose the irrigation water to a magnetic field with a peak intensity of 200 Gauss for 24 hours.

14. Use of an equipment according to claims 1 or 4, for accelerating growth of bulbs of tulip, characterised in that the control unit (5) is set to expose the bulbs to a magnetic field of 280 Gauss with a frequency of 50 Hz for 15 days, to submit the irrigation water to a magnetic field with a peak intensity of 200 Gauss for 24 hours, and to submit the cultivation earth (11) to a magnetic field with a peak intensity of 300 Gauss throughout the growth time, including the blooming stage.

15. Use of an equipment according to claim 1, for accelerating growth of bulbs of hyacinth, characterized in that the control unit (5) is set to expose the bulbs to a magnetic field of 280 Gauss with a frequency of 50 Hz for 2 days, and to submit the irrigation water to a magnetic field with a peak intensity of 200 Gauss for 24 hours.

16. Use of an equipment according to claim 1, for accelerating growth of winter spinach, characterised in that the control unit (5) is set to expose seeds of winter spinach to a magnetic field of peak intensity of 280 Gauss with a frequency of 50 Hz for 20 days, and to submit the irrigation water to a magnetic field with a peak intensity of 200 Gauss for at least 24 hours.

17. Use of an equipment according to claims 1 or 4, for accelerating growth of spinach, characterised in that the control unit (5) is set to expose seeds of spinach to a magnetic field of peak intensity of 200 Gauss with a frequency of 50 Hz for 96 hours, to submit irrigation water to a magnetic field with a peak intensity of 200 Gauss and a frequency of 50 Hz for at least 12 hours, and to submit the plantlets of spinach to a magnetic field of intensity and frequency selected among the following values: 100 Gauss and 50 Hz, 160 Gauss and 50 Hz, 140 Gauss and 100 Hz, throughout the growth time.

18. Use of an equipment according to claims 1 or 4, for accelerating growth of cabbage lettuce, characterised in that the control unit (5) is set to expose seeds of cabbage lettuce to a magnetic field of 300 Gauss with a frequency of 50 Hz for 96 hours, to submit the irrigation water to a magnetic field of 200 Gauss with a frequency of 50 Hz for at least 6 hours, and to submit the plantlets of cabbage lettuce to a magnetic field of intensity and frequency selected among the following values: 100 Gauss and 50 Hz, 160 Gauss and 50 Hz, 140 Gauss and 100 Hz, throughout the growth time.

19. Use of an equipment according to claims 1 or 4, for accelerating growth of wheat, characterised in that the control unit (5) is set to expose wheat seeds to a magnetic field of peak intensity and frequency selected among the following values: 300 Gauss and 50 Hz, 400 Gauss and 50 Hz, 200 Gauss and 100 Hz, for 20 days, to submit the irrigation water to a magnetic field of peak intensity of 200 Gauss with a frequency of 50 Hz for at least 6 hours, and to submit the plantlets of wheat to a magnetic field of peak intensity of 140 Gauss with a frequency of 50 Hz or 140 Gauss and 100 Hz.

## Patentansprüche

1. Vorrichtung zur Förderung des Wachstums von pflanzlichen Organismen, bestehend aus einer Einheit (3,4) zur Behandlung von Zwiebeln/Knollen oder Samen von pflanzlichen Organismen mit zumindest einem Behälter (15,18) und einer Magnetspule (8,19) in einer Form zum Umgeben der Behälter (15,18) und einer Steuereinheit (5), die einen pulsierenden Strom erzeugt und mit der Magnetspule (8,19) zur Erzeugung eines pulsierenden Magnetfeldes in dem Behälter (15,18) elektrisch verbunden ist, dadurch gekennzeichnet, daß die Vorrichtung ferner eine Einheit (20) zur Behandlung von Bewässerungswasser umfaßt, die einen abgedichteten Behälter (23) mit einem Wassereinlaß (25) und einem Wasserauslaß (26) und eine Magnetspule (24) aufweist, die um den Behälter (23) gewickelt und mit der Steuereinheit (5) elektrisch verbunden ist, und daß die Magnetspulen (8,19;23) der/des Zwiebel/Knollen- oder Samenbehälter(s) (15,18) und des Wasserbehälters (23) selektiv durch die Steuereinheit (5) erregbar sind, wobei die Steuereinheit (5) unidirektionale pulsierende Ströme erzeugt, wodurch die pulsierenden Magnetfelder eine unidirektionale Polarität besitzen, und die Arbeitsspiele der Magnetspulen (8,19;23) von der Steuereinheit (5) über den Wachstumsprozeß der pflanzlichen Organismen hinweg programmierbar sind.

2. Vorrichtung nach Anspruch 1, dadurch gekennzeichnet, daß die Einheit (4) zur Samenbehandlung einen Behälter (18) zur losen Unterbringung der Samen umfaßt und der Behälter (18) einen Fülltrichter (21) in seinem oberen Bereich und einen Entnahmeauslauf (22) in seinem Bodenbereich aufweist.

3. Vorrichtung nach Anspruch 1, dadurch gekennzeichnet, daß die Einheit (3) zur Behandlung von Zwiebeln/Knollen oder Samen eine Mehrzahl von Behältern (15), ein Abstützungsteil (12) mit einer Mehrzahl von Durchgangslöchern (13) zum wegnehmbaren Aufnehmen der Mehrzahl von Behältern (15) und eine Mehrzahl von Magnetspulen (8) umfaßt, die jeweils um eines der Durchgangslöcher (13) mit vertikal ausgerichteten Achsen zum Erzeugen von Magnetfeldern mit aufwärtsgerichteter Nordpolarität angeordnet sind.

4. Vorrichtung nach Anspruch 1 und einem der Ansprüche 2 oder 3, dadurch gekennzeichnet, daß sie ferner eine Einheit (2) zur Behandlung von Anbauerde (11) mit einem die Anbauerde (11) aufnehmenden Gestell (6) und einer Mehrzahl von Magnetspulen (8) umfaßt, die in der Anbauerde (11) angeordnet und mit der Steuereinheit (5) elektrisch verbunden sind, wobei die Magnetspulen (8) mit vertikalen Achsen angeordnet und von der Steuereinheit (5) zur Erzeugung von Magnetfeldern mit aufwärtsgerichteter Nordpolarität erregbar sind.

5. Vorrichtung nach Anspruch 4, dadurch gekennzeichnet, daß die Mehrzahl von Magnetspulen (8) Gruppen von vorzugsweise koaxial übereinander angeordneten Magnetspulen umfaßt und jede Gruppe zumindest eine am Boden (10) des Gestells (6) getrennt von der Anbauerde (11) angeordnete erste Magnetspule, eine im Inneren der Anbauerde (11) in Saattiefe angeordnete zweite Magnetspule und zumindest eine auf der Oberfläche der Anbauerde (11) angeordnete dritte Magnetspule aufweist.

6. Vorrichtung nach Anspruch 1 oder 2, dadurch gekennzeichnet, daß der Saatbehälter (4) ein Mischgerät in seinem Inneren umfaßt.

7. Vorrichtung nach Anspruch 1, dadurch gekennzeichnet, daß der Wasserbehälter (23) mit Mitteln zum Unterbrechen des Wassereinlasses (25) und des Wasserauslasses (26) und mit einer Kontrolleinrichtung des freien Wasserstands versehen ist.

8. Vorrichtung nach Anspruch 1 oder 2, dadurch gekennzeichnet, daß die von der Steuereinheit (5) erzeugten pulsierenden Ströme vom Typ der halben Sinuswelle mit einer Frequenz im extrem niedrigen Frequenzbereich (enf) sind.

9. Vorrichtung nach Anspruch 1, dadurch gekennzeichnet, daß die Steuereinheit (5) eine Einrichtung zum zeitweiligen Inaktivieren der Stromzufuhr zu den Magnetspulen (8,19,23) umfaßt.

10. Vorrichtung nach Anspruch 1 oder 7, dadurch gekennzeichnet, daß Dauermagnete oder Teile von diesen in das Bewässerungswasser im Wasserbehälter (23) eingesetzt sind.

11. Vorrichtung nach Anspruch 4 oder 5, dadurch gekennzeichnet, daß Dauermagnete oder Teile von diesen in die Anbauerde (11) im Gestell (6) eingesetzt sind.

12. Verwendung einer Einrichtung nach Anspruch 1, zur Förderung des Wachstums von Gartenbau- Blumenzucht- und Getreidespezies, dadurch gekennzeichnet, daß die Steuereinheit (5) so eingestellt wird, daß die Samen der Spezies einem Magnetfeld mit einer Stärke der Spitzenwerte von 20 bis 1000 Gauss, entsprechend Mittelwerten von 4 bis 100 Gauss, mit einer Frequenz zwischen 50 und 100 Hz für eine Zeit zwischen 6 und 20 Tagen vor dem Säen ausgesetzt werden und das Bewässerungswasser einem Magnetfeld für eine Zeit zwischen 4 und 24 Stunden vor der Zuführung des Wassers zur Anbauerde (11) ausgesetzt wird.

13. Verwendung einer Vorrichtung nach Anspruch 1, zur Förderung des Wachstums von Narzissenzwiebeln, dadurch gekennzeichnet, daß die Steuereinheit (5) so eingestellt wird, daß die Zwiebeln einem Magnetfeld von 280 Gauss mit einer Frequenz von 50 Hz für eine Zeit von 7 Tagen ausgesetzt werden und das Bewässerungswasser einem Magnetfeld mit einer Spitzenstärke von 200 Gauss für 24 Stunden ausgesetzt wird.

14. Verwendung einer Vorrichtung nach Anspruch 1 oder 4 zur Förderung des Wachstums von Tulpenzwiebeln, dadurch gekennzeichnet, daß die Steuereinheit (5) so eingestellt wird, daß die Zwiebeln einem Magnetfeld von 280 Gauss mit einer Frequenz von 50 Hz für 15 Tage ausgesetzt werden, das Bewässerungswasser einem Magnetfeld mit einer Spitzenstärke von 200 Gauss für 24 Stunden ausgesetzt wird und die Anbauerde (11) einem Magnetfeld mit einer Spitzenstärke von 300 Gauss über die Wachstumszeit hinweg, einschl. des Blühstadiums, ausgesetzt wird.

15. Verwendung einer Vorrichtung nach Anspruch 1, zur Förderung des Wachstums von Hyazinthenzwiebeln, dadurch gekennzeichnet, daß die Steuereinheit (5) so eingestellt wird, daß die Zwiebeln einem Magnetfeld von 280 Gauss mit einer Frequenz von 50 Hz für zwei Tage ausgesetzt werden und das Bewässerungswasser einem Magnetfeld mit einer Spitzenstärke von 200 Gauss für 24 Stunden ausgesetzt wird.

16. Verwendung einer Vorrichtung nach Anspruch 1, zur Förderung des Wachstums von Winterspinat, dadurch gekennzeichnet, daß die Steuereinheit (5) so eingestellt wird, daß die Samen des Winterspinats einem Magnetfeld mit einer Spitzenstärke von 280 Gauss bei einer Frequenz von 50 Hz für 20 Tage ausgesetzt werden und das Bewässerungswasser einem Magnetfeld mit einer Spitzenstärke von 200 Gauss für zumindest 24 Stunden ausgesetzt wird.

17. Verwendung einer Vorrichtung nach Anspruch 1 oder 4, zur Förderung des Wachstums von Spinat, dadurch gekennzeichnet, daß die Steuereinheit (5) so eingestellt wird, daß die Samen des Spinats einem Magnetfeld mit einer Spitzenstärke von 200 Gauss bei einer Frequenz von 50 Hz für 96 Stunden ausgesetzt werden, das Bewässerungswasser einem Magnetfeld mit einer Spitzenstärke von 200 Gauss und einer Frequenz von 50 Hz für zumindest 12 Stunden ausgesetzt wird und die jungen Spinatpflanzen einem Magnetfeld mit einer Stärke und Frequenz ausgesetzt werden, die unter den folgenden Werten gewählt werden: 100 Gauss und 50 Hz, 160 Gauss und 50 Hz, 140 Gauss und 100 Hz, über die Wachstumszeit hinweg.

18. Verwendung einer Vorrichtung nach Anspruch 1 oder 4, zur Förderung des Wachstums von Kopfsalat, dadurch gekennzeichnet, daß die Steuereinheit (5) so eingestellt wird, daß die Kopfsalatsamen einem Magnetfeld von 300 Gauss mit einer Frequenz von 50 Hz für 96 Stunden ausgesetzt werden, das Bewässerungswasser einem Magnetfeld von 200 Gauss mit einer Frequenz von 50 Hz für zumindest 6 Stunden ausgesetzt wird, und die jungen Kopfsalatpflanzen einem Magnetefeld mit einer Stärke und Frequenz ausgesetzt werden, die unter den folgenden Werten gewählt werden: 100 Gauss und 50 Hz, 160 Gauss und 50 Hz, 140 Gauss und 100 Hz, über die Wachstumszeit hinweg.

19. Verwendung einer Vorrichtung nach Anspruch 1 oder 4, zur Förderung des Wachstums von Weizen, dadurch gekennzeichnet, daß die Steuereinheit (5) so eingestellt wird, daß die Weizensamen einem Magnetfeld mit einer Spitzenstärke und Frequenz ausgesetzt werden, die unter den folgenden Werten gewählt werden: 300 Gauss und 50 Hz, 400 Gauss und 50 Hz, 200 Gauss und 100 Hz, für 20 Tage, das Bewässerungswasser einem Magnetfeld mit einer Spitzenstärke von 200 Gauss bei einer Frequenz von 50 Hz für zumindest 6 Stunden ausgesetzt wird und die jungen Weizenpflanzen einem Magnetfeld mit einer Spitzenstärke von 140 Gauss bei einer Frequenz von 50 Hz oder 140 Gauss und 100 Hz ausgesetzt werden.

## Revendications

1. Équipement pour accélérer la croissance d'organismes végétaux, comprenant une unité (3, 4) pour le traitement de bulbes ou de graines des organismes végétaux ayant au moins un récipient (15, 18) et un solénoïde (8, 19) d'une forme destinée à entourer le récipient (15, 18), et une unité de contrôle (5) générant un courant pulsé et reliée électriquement audit solénoïde (8, 19) pour générer un champ magnétique pulsé à l'intérieur dudit récipient (15, 18), caractérisé en ce que l'équipement comprend de plus une unité (20) pour le traitement de l'eau d'irrigation comprenant un récipient hermétiquement fermé (23) ayant une entrée d'eau (25) et une sortie d'eau (26) et un solénoïde (24) enroulé autour du récipient (23) et relié électriquement à ladite unité de contrôle (5), et en ce que les solénoïdes (8, 19; 23) dudit ou desdits récipient(s) (15, 18) à bulbes ou à graines et dudit récipient d'eau (23) peuvent être mis sous tension de manière sélective par ladite unité de contrôle (5), ladite unité de contrôle (5) générant des courants pulsés unidirectionnels, de sorte que les champs magnétiques pulsés ont une polarité unidirectionnelle, les cycles de fonctionnement desdits solénoïdes (8, 19; 23) étant programmables par ladite unité de contrôle (5) pendant tout le processus de croissance des organismes végétaux.

2. Equipement selon la revendication 1, caractérisé en ce que l'unité (4) de traitement de graines comprend un récipient (18) destiné à recevoir des graines en vrac, ledit récipient (18) ayant une trémie de chargement (21) dans sa partie supérieure et une goulotte de sortie (22) dans sa partie inférieure.

3. Équipement selon la revendication 1, caractérisé en ce que l'unité (3) de traitement de bulbes ou de graines comprend une pluralité de récipients (15), une structure de soutien (12) ayant une pluralité de trous traversants (13) pour recevoir de manière amovible ladite pluralité de récipients (15), et une pluralité de solénoïdes (8) placés chacun autour de l'un respectif des trous traversants (13) avec les axes disposés verticalement pour générer des champs magnétiques de polarité nord tournée vers le haut.

4. Équipement selon la revendication 1 et l'une quelconque des revendications 2 et 3, caractérisé en ce qu'il comprend de plus une unité (2) de traitement de la terre de culture (11) comprenant un châlit (6) recevant la terre de culture (11), une pluralité de solénoïdes (8) agencés dans la terre de culture (11) et reliés électriquement à ladite unité de contrôle (5), lesdits solénoïdes (8) étant agencés avec leurs axes verticaux et pouvant être mise sous tension par ladite unité de contrôle (5) pour générer des champs magnétiques de polarité nord tournée vers le haut.

5. Équipement selon la revendication 4, caractérisé en ce que ladite pluralité de solénoïdes (8) comprend des groupes de solénoïdes superposés de préférence de manière coaxiale, chaque groupe comprenant au moins un premier solénoïde placé sur le fond (10) du châlit (6) séparément de la terre de culture (11), un deuxième solénoïde placé à l'intérieur de la terre de culture (11) à la profondeur de semailles, et au moins un troisième solénoïde placé à la surface de la terre de culture (11).

6. Équipement selon la revendication 1 ou 2, caractérisé en ce que ledit récipient à graines (4) comprend un dispositif de mélange en son intérieur.

7. Équipement selon la revendication 1, caractérisé en ce que ledit récipient d'eau (23) est muni de moyens pour intercepter ladite entrée d'eau (25) et ladite sortie d'eau (26), et de moyens de contrôle du niveau d'eau libre.

8. Équipement selon la revendication 1 ou 2, caractérisé en ce que les courants pulsés générés par ladite unité de contrôle (5) sont du type à onde semi-sinusoïdale avec une fréquence dans le domaine des fréquence extrêmement faibles (ELF).

9. Équipement selon la revendication 1, caractérisé en ce que ladite unité de contrôle (5) comprend des moyens pour provisoirement inactiver l'alimentation de courant vers lesdits solénoïdes (8, 19, 23).

10. Équipement selon la revendication 1 ou 7, caractérisé en ce que des aimants permanents ou des parties d'aimants permanents sont insérés dans l'eau d'irrigation dans ledit récipient à eau (23).

11. Équipement selon la revendication 4 ou 5, caractérisé en ce que des aimants permanents ou des parties d'aimants permanents sont insérés dans la terre de culture dans châlit (6).

12. Utilisation d'un équipement selon la revendication 1, pour accélérer la croissance d'espèces horticoles, floricoles et céréalières, caractérisée en ce que l'unité de contrôle (5) est réglée pour exposer des graines desdites espèces à un champ magnétique d'intensité ayant des valeurs de crête de 20 à 1000 Gauss, correspondant à des valeurs moyennes de 4 à 100 Gauss, avec une fréquence comprise entre 50 et 100 Hz pendant une durée de 6 à 20 jours avant les semailles, et pour exposer l'eau d'irrigation à un champ magnétique pour une durée comprise entre 4 et 24 heures avant d'envoyer l'eau à la terre de culture (11).

13. Utilisation d'un équipement selon la revendication 1, pour accélérer la croissance de bulbes de narcisses, caractérisée en ce que l'unité de contrôle (5) est réglée pour exposer les bulbes à un champ magnétique de 280 Gauss avec une fréquence de 50 Hz pendant une durée de 7 jours, et pour exposer l'eau d'irrigation à un champ magnétique ayant une intensité de crête de 200 Gauss pendant 24 heures.

14. Utilisation d'un équipement selon la revendication 1 ou 4, pour accélérer la croissance de bulbes de tulipes, caractérisée en ce que l'unité de contrôle (5) est réglée pour exposer les bulbes à un champ magnétique de 280 Gauss avec une fréquence de 50 Hz pendant 15 jours, pour exposer l'eau d'irrigation à un champ magnétique ayant une intensité de crête de 200 Gauss pendant 24 heures, et pour exposer la terre de culture (11) a un champ magnétique ayant une intensité de crête de 300 Gauss pendant toute la période de croissance, y compris la période de floraison.

15. Utilisation d'un équipement selon la revendication 1, pour accélérer la croissance de bulbes de hyacinthes, caractérisée en ce que l'unité de contrôle (5) est réglée pour exposer les bulbes à un champ magnétique de 280 Gauss avec une fréquence de 50 Hz pendant 2 jours, et pour exposer l'eau d'irrigation à un champ magnétique ayant une intensité de crête de 200 Gauss pendant 24 heures.

16. Utilisation d'un équipement selon la revendication 1, pour accélérer la croissance d'épinards d'hiver, caractérisée en ce que l'unité de contrôle (5) est réglée pour exposer des graines d'épinards d'hiver à un champ magnétique d'une intensité de crête de 280 Gauss à une fréquence de 50 Hz pendant 20 jours, et pour exposer l'eau d'irrigation à un champ magnétique ayant une intensité de crête de 200 Gauss pendant au moins 24 heures.

17. Utilisation d'un équipement selon la revendication 1 ou la revendication 4, pour accélérer la croissance d'épinards, caractérisée en ce que l'unité de contrôle (5) est réglée pour exposer des graines d'épinards à un champ magnétique d'une intensité de crête de 200 Gauss à une fréquence de 50 Hz pendant 96 heures, pour exposer l'eau d'irrigation à un champ magnétique ayant une intensité de crête de 200 Gauss et une fréquence de 50 Hz pendant au moins 12 heures, et pour exposer les plantules d'épinards à un champ magnétique d'intensité et de fréquence choisies parmi les valeurs suivantes : 100 Gauss et 50 Hz, 160 Gauss et 50 Hz, 140 Gauss et 100 Hz, pendant toute la période de croissance.

18. Utilisation d'un équipement selon la revendication 1 ou la revendication 4, pour accélérer la croissance de laitue, caractérisée on ce que l'unité de contrôle (5) est réglée pour exposer des graines de laitue à un champ magnétique de 300 Gauss à une fréquence de 50 Hz pendant 96 heures, pour exposer l'eau d'irrigation à un champ magnétique de 200 Gauss et une fréquence de 50 Hz pendant au moins 6 heures, et pour exposer les plantules de laitue à un champ magnétique d'intensité et de fréquence choisies parmi les valeurs suivantes : 100 Gauss et 50 Hz, 160 Gauss et 50 Hz, 140 Gauss et 100 Hz, pendant toute la période de croissance.

19. Utilisation d'un équipement selon la revendication 1 ou la revendication 4, pour accélérer la croissance de blé, caractérisée en ce que l'unité de contrôle (5) est réglée pour exposer des graines de blé à un champ magnétique d'intensité et de fréquence choisies parmi les valeurs suivantes : 300 Gauss et 50 Hz, 400 Gauss et 50 Hz, 200 Gauss et 100 Hz, pendant 20 jours, pour exposer l'eau d'irrigation à un champ magnétique, ayant une intensité de crête de 200 Gauss et une fréquence de 50 Hz pendant au moins 6 heures, et pour exposer les plantules de blé à un champ magnétique d'une intensité de crête de 140 Gauss et d'une fréquence de 50 Hz, ou 140 Gauss et 100 Hz.
